# EUROPEAN PATENT SPECIFICATION

(11) **EP 4 211 763 B1**
(45) Date of publication and mention of the grant of the patent: **12.08.2026**
(21) Application number: 21773901.0
(22) Date of filing: 10.09.2021
(51) Int. Cl.: H02G 3/04, H02G 9/10, B60L 53/31

(54) **CHARGING STATION FOUNDATION**
LADESTATIONSFUNDAMENT
SOCLE D'UNE STATION DE RECHARGE

(30) Priority: 11.09.2020 SE 2051070
(43) Date of publication of application: 19.07.2023
(73) Proprietor: Unimi Holding AB, 187 73 Täby (SE)
(72) Inventor: SVENSSON, Stefan, 355 73 GEMLA (SE)
(74) Representative: Ström & Gulliksson AB
(86) International application number: PCT/SE2021/050868
(87) International publication number: WO 2022/055413

(56) References cited:
- EP-B1- 1 961 878
- WO-A2-2012/101266
- DE-U- 1 932 594
- DE-U1- 202018 105 349
- US-A1- 2006 231 279

## Description

### TECHNICAL FIELD

The present invention generally pertains to infrastructure for electric or plug-in hybrid vehicles, and more specifically devices for anchoring a charging station to ground.

### BACKGROUND

Vehicles provided with electric motors and batteries for powering said electric motors are increasingly popular. One reason is the ability to drive the vehicles without using combustion engines, thereby avoiding consumption of fossil fuels and emission of combustion gases.

Modern battery technology makes it possible to store enough energy on board a vehicle to drive it using only battery power. However, battery capacity is limited and cost is high and therefore infrastructure for charging the batteries should be readily available such that the vehicle can be charged at the convenience of the driver, for example outside a shopping mall, at a public car park or at work.

A drawback for the prospective buyer of an electric vehicle is that the infrastructure for charging electric vehicles still needs to be expanded. Hence, owning and operating an electric vehicle would potentially become inconvenient.

Likewise, a drawback exists for anyone thinking about deploying infrastructure for charging of electric vehicles as there is currently a limited demand for such service, since still relatively few electric vehicles are in traffic. A further drawback is that the installations are costly and typically require ground work and that the demand for such service at a certain site is hard to predict. Also, there is a number of different technologies and voltages for charging electric vehicles and yet no well-established standard. Two examples are shown in WO2010115929A2 and WO2010115926A2.

Hence, companies and municipalities that wish to offer electric charging are left no other choice but to choose from these competing technologies and providers, any such choice being subject to the risk of the investing in a technology not demanded by tomorrow's drivers and to the risk of investing in too large or too small charging capacity.

Therefore, an improved infrastructure for electric vehicles would be advantageous in order to promote the occurrence of electric vehicles.

US 2006/231279 A1 discloses a grade level box for use with underground utilities connections having vertical walls reinforced with exterior vertical and horizontal ribs integrally moulded with the wall structure. DE 19 32 594 U discloses a foundation for police call boxes or other telecommunications and signalling columns equipped with cable connections.

### SUMMARY

An object of the present invention is to provide a novel device for mounting of a charging station, which enables improved infrastructure for electric vehicles to be deployed at low risk and at low cost. The production, storage, transport and installation of the device shall involve as small a climate footprint as possible. Also, the device shall allow for facilitated storage, transport and installation.

These objects, and other objects as will become clear from the following description, have been achieved by the present invention that provides a charging station mounting device as defined in claim 1.

The adoption of a first and second main part that together form the foundation member makes possible the manufacture of the foundation member from plastic material. Preferably by injection moulding.

A charging station of the kind described in this disclosure may alternatively be referred to as a charging pole.

Preferably, each one of the first and second main part comprise a connection flange for securing the first and second main part together. The flange may be provided with through holes for bolt and nut assemblies.

The external, axial strengthening ribs and external, radial strengthening ribs may advantageously form an external strengthening grid that after installation, which effectively acts to hinder the charging pole mounting device from moving when installed in the ground.

Preferably, the foundation member has the form of a hollow cylinder with a base, the base having a greater radial dimension than the cylindrical structure whereby the base acts to hinder the charging pole mounting device from moving when installed.

Advantageously, the base, when seen from above, has a polygonal shape, such as a rectangular or square share, thereby effectively hindering the foundation member from being rotated when installed.

Preferably, the first and second main parts are of equal shape, which reduces manufacturing costs.

Preferably, the first and second main parts are manufactured by injection moulding. The same mould may be used for producing both the first and the second main part.

Preferably, the first and second main parts are made of plastic material comprising polypropylene (PP). Preferably, the plastic material comprises rubber. Preferably, the rubber is a blend of polypropylene and ethylene propylene diene terpolymer (PP-EPDM). The first and second main parts are preferably made from recycled plastic material.

Such plastic material, in particular a mixture of PP and PP-EPDM, is mechanically advantageous over a broad temperature field, e.g. not brittle, and further resistant to ageing, ultraviolet light, chemicals and dog urine.

A plastic foundation member is light weight, as compared to one of concrete, and further involves less CO₂ emissions during manufacture and transport. A lightweight foundation member is further easy to handle, transport and install. A plastic foundation member may further be more impact resistant than one made of concrete, especially when the plastic material is a mixture of PP and PP-EPDM. The plastic material is preferably recycled plastic material.

Advantageously, the mounting device is predominantly made from a plastic material. The mounting device comprises the plastic foundation member and other components of other materials, mostly metal, but by volume the chief portion of the mounting device is made from plastic material, at least more than 50 % and preferably at least 80 %. Said plastic material is preferably a mixture of PP and PP-EPDM

Preferably, the mounting device comprises an anchoring bar and the foundation member comprises means for holding the respective ends of the anchoring bar.

Preferably, the first main part and the second main part are adapted to hold the respective ends of the anchoring bar between them when assembled.

Preferably, the first main part and the second main part, when assembled, form bar holders that hold, preferably clamp, the anchoring bar between the first main part and the second main part.

Preferably, at least one of the first main part and the second main part comprises a support interface for protection unit receivers that are adapted to hold a protection unit. Plastic first and second main parts, especially when made of a mixture of PP and PP-EPDM, may provide a long-lasting support for a protection unit.

Preferably, the adapter element is mounted to the foundation member below the top edge of the foundation member.

Such a charging pole mounting device promotes deployment of infrastructure for charging of electric vehicles by providing a low-cost, future-proof platform for fitting charging poles from any supplier using virtually any charging technology.

In an embodiment, the adapter element is mounted to the foundation member below the top edge of, and preferably inside the foundation member. This is an advantageous feature since the adapter element and the anchoring means between the adapter element and the foundation member are thereby protected by the foundation member, at least from forces coming from the side. The positioning of the adapter element and anchoring means inside the foundation member is advantageous since no upwards projection part may obstruct vehicles or persons passing the top of the device. Another advantageous feature is that since the adapter element is arranged within the foundation element it is not an obstacle when arranging the surrounding environment, e.g. a sidewalk or a parking lot.

In another embodiment, the device further comprises a protection unit which is attached to the adapter element and which is preferably arranged around the charging pole and extending along at least a portion of the charging pole. The protection unit protects the pole from any damage in case a vehicle hits the arrangement. This leads to low reparations costs and undisturbed operation time when the pole can be used for charging batteries of a vehicle.

In a second aspect, there is provided a device for mounting of a charging pole comprising a foundation member configured to be installed below ground level, anchoring means by which the charging pole is mountable to the foundation member, and a cover member for covering upwardly open spaces of the mounting device.

Such a mounting device promotes deployment of infrastructure for charging of electric vehicles by providing a mounting device which allows convenient and inexpensive post-installation of charging poles, since the cover member may easily be removed to allow access to the anchoring means and cable or cable pipe of said mounting device, such that a charging pole may be attached at low cost and in a short time. Further, such a mounting device allows for a longer time period between installation of the system and the time of installation of a charging pole, since the cover member protects inner parts of the mounting device from weather and damage.

In another aspect, a foundation system for charging poles for electrically powered vehicles is provided. The system comprises a plurality of mounting devices according to the invention, as defined in the appended device claims. Each mounting device is prepared for electrical supply by means of one or more cables or cable pipes installed in ground.

The mounting devices and the foundation system make it possible to initially install only a few charging poles at a site, such as a car park, and then easily expand the charging capacity on that site by post-fitting charging poles as demand grows. When post-fitting charging poles, there is no need to dig holes in the street, since additional foundation members are already provided below ground and provided with means for easy provision of power to the charging poles. Also, since no part of the mounting device protrudes above ground level when awaiting mounting of a charging pole, it allows normal utilization of the surface under which the mounting device is buried, without reducing the aesthetics of the site. It should be understood that the meaning of 'below ground level' essentially means that it does not protrude above ground level and thereby it does not obstruct pedestrians or traffic. Hence, the device may be installed below ground with its top surface substantially flush with ground level.

In some examples not according to the claimed invention, a method of installing a foundation system of the invention is provided. The method comprises the steps of: providing at least one recess in ground, providing a plurality of mounting devices according to the invention in said at least one recess, providing means for electrical supply to the mounting devices, and restoring ground at said site such that the mounting devices do not protrude above ground level.

Such a method reduces the need for construction work at a site where deployment of infrastructure for charging of electric vehicles is planned, since substantially all excavating and activities are performed once independently of when charging poles are to be deployed at said site. Hence, there is no need of repeatedly opening up the ground level when installing charging poles.

In some examples not according to the claimed invention, a method of installing a charging pole to a foundation system according to the invention is provided. This method comprises the steps of providing access to the anchoring means of the respective mounting device, providing an adapter element for fitting the charging pole to the foundation member, providing electric supply to the charging pole by means of a cable or cable pipe already provided at the mounting device, and securing the charging pole to the mounting device by means of the anchoring means. Such a method allows easy post installation of charging poles to a site where a system of the invention is installed.

According to a preferred embodiment, the foundation member is provided with first coupling means for engagement with a second coupling means of the adapter element. The first and second coupling means make it possible to control the relative position and rotation between the foundation member and the adapter and any thereto attached charging pole.

Further features of the invention and its embodiments are set forth in the appended claims and may also be understood from the following description.

### BRIEF DESCRIPTION OF THE DRAWINGS

In the following, embodiments of prior art and of the invention will be described with reference to non-limiting examples shown in the accompanying drawings, in which:
Fig. 1 is a schematic view from above showing a prior art system for charging of electric vehicles;
Fig. 2 is a side view of a prior art system installed below ground;
Fig. 3 is a perspective view of a prior art device for mounting of a charging pole;
Fig. 4 is a top view of the device of Fig. 3;
Fig. 5 is a cross-sectional view in perspective of the cross-section along the line V-V shown in Fig. 4;
Fig. 6 is an exploded perspective view of the mounting device also shown in Figs 3-5;
Fig. 7 is a top view of a prior art mounting device;
Fig. 8 is a cross-sectional view in perspective of the cross-section along the line VIII - VIII in Fig. 7;
Fig. 9 is a perspective view showing a prior art cover member;
Fig. 10 shows a cross-sectional view in perspective of another prior art device for mounting of a charging pole;
Fig. 11 shows a perspective view of the device shown in Fig. 3 provided with a protection unit;
Fig. 12 shows a cross-sectional view of the device shown in Fig. 11;
Fig. 13 is a perspective view of a foundation member of a device according to an embodiment of the present invention;
Fig. 14 is a top view of the foundation member of figure 13;
Fig. 15 is an exploded view of the foundation member of figure 13; and
Fig. 16 shows the foundation member of figure 13 with an attached support means for a protection unit.

### DETAILED DESCRIPTION

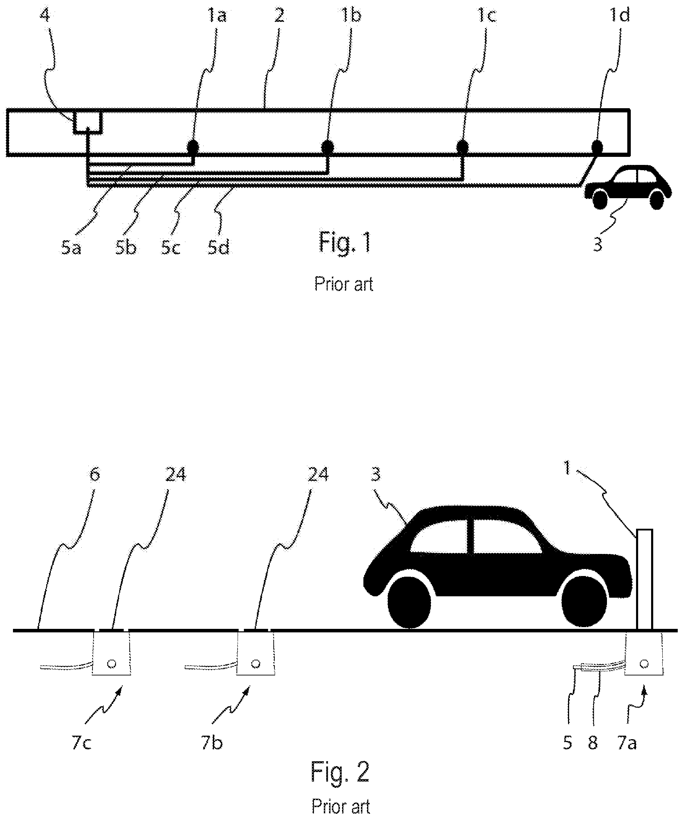

Fig. 1 shows four charging poles 1a-d (also known as charging stations) for electric vehicles mounted to ground at a pavement 2 using a system known from WO2012101266A2. An electric vehicle 3 is parked next to one of the poles/stations 1d and is connected to the pole 1 such that batteries (not shown) of the vehicle 3 can be charged. In order to supply electricity to the charging poles 1a-d and the vehicle 3, the poles 1a-d are connected to a grid connection 4 by four connection cables 5a-d installed below ground, preferably protected by conventional cable pipes (not shown) commonly used for underground cable installation.

Fig. 2 shows a system also known from WO2012101266A2 installed in ground 6. A charging pole 1 is mounted to ground using a mounting device 7a known from the same publication. The charging pole 1 is connected to a grid connection (not shown) through a cable 5 provided through the mounting device 7a. As shown, the system comprises a plurality of mounting devices 7a-c installed below ground 6, but only one of them 7a is currently used for mounting a charging pole 1 to ground 6. When needed, additional charging poles may easily be attached to the remaining mounting devices 7b-c without any need of excessive construction work, i.e. without digging up the street/ground 6 again. When installing the system, cables 5 and/or cable pipes 8 are connected to each mounting device 7a-c, such that it is easy to provide electricity to charging poles subsequently mounted to the mounting devices 7a-c of the system. The inner space below ground in each mounting device 7a-c makes it possible to fit an extra length of cable 5 below ground and to post-install a cable through a cable pipe 8 connected to the mounting device 7a-c during installation of the system.

Since no part of the mounting devices 7a-c protrudes above ground level 6 at each respective mounting device 7a-c, the system does not obstruct normal use of the pavement, street or other surface where it is installed. Hence, people can walk and drive normally on the ground level 6 where the system is installed, whilst at the same time the surface is left visually appealing. Further, since an installed system does not involve any negative practical or aesthetic side effects, there is no hurry to attach charging poles to the site. By this system, purchasing and installation of charging poles may be postponed until demand for charging of vehicles rises, thereby reducing cost and financial risk of the deployment of such infrastructure. Thereby it is easy and inexpensive to post-install charging poles to the system.

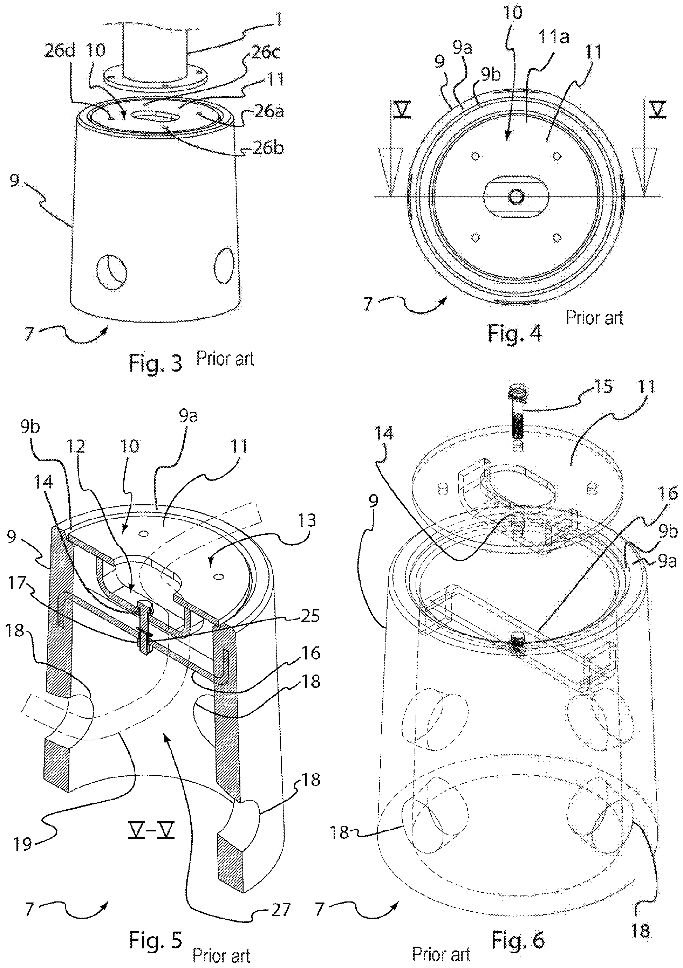

Figs 3-6 show one of the prior art mounting devices 7 of Fig 2 next to a charging pole 1 ready to be mounted to ground using the mounting device 7. The mounting device 7 comprises a substantially hollow cylindrical foundation member 9, preferably made of concrete, and anchoring means 10 by which the charging pole 1 is mountable to the foundation member 9. The anchoring means 10 comprises a detachable adapter element 11 configured to fit the charging pole 1 to the foundation member 9.

A first portion 12 of the detachable adapter element 11 fits with the foundation member 9 and a second portion 13 fits with the charging pole 1. The peripheral top edge portion 9a of the foundation member 9 has a circular or annular recess 9b which matches and receives the peripheral portion 11a of the adapter element 11 in a close fit. The depth of the annual recess 9b corresponds to the thickness of the adapter element 11 such that the top surface of the same is substantially flush with the annular top surface of the top edge portion 9a of the foundation member 9.

The first portion 12 is provided with coupling means comprising an aperture or a hole 14 configured to receive a bolt 15 for securing the adapter element 11 to the foundation member 9. An anchoring bar 16 is molded into the foundation member 9 for receiving the bolt 15 in a hole 25, and a threaded element 17 is provided by the anchoring bar 16 for engagement with the bolt 15. The bolt 15 is centrally located in the mounting device 7, such that the adapter element 11 can be rotated and subsequently fixed to hold the charging pole 1 in a desired position. Further, the anchoring bar 16 may have bent ends for stronger engagement with the foundation member 9.

The second portion is provided with coupling means comprising four threaded holes 26a-d configured to receive bolts (not shown) for securing the mounting pole 1 to the adapter element 11 through four corresponding holes of the charging pole.

As shown in Fig. 5, the prior art foundation member 9 has a plurality of entry openings or holes 18 for receiving an electric cable and/or cable pipe from the side of the mounting device. An electric cable 19 (shown in part with dashed lines) may be introduced into the mounting device through one of the entry holes 18 and connected to the charging pole through the inner space of the foundation member 9. An advantage of these entry holes 18 is that during installation of mounting devices 7 one does not have to dig as deep in order to be able to fit the cable or cable pipe into the mounting device 7. Of course, the entry holes 18 could be provided through the bottom of the foundation member 9 but then one would have to dig deeper to fit the cable 19 or cable pipe. Further, since there is a plurality of entry holes 18, more cables may be introduced into the mounting device 7 and from several directions. Thus, a main cable may be coupled to the mounting devices, one after the other, wherein power may be taken from the main cable at each respective mounting device for providing power to charging poles through an additional length of cable. If cables are installed like this, the total length of cable needed for connecting the system to a grid connection may be somewhat reduced as opposed to using a separate cable for each respective mounting pole stretching all the way from the grid connection to the respective pole. Alternatively, the entry holes 18 are used for connecting mounting devices 7 via cable pipes for subsequent installation of one or more cables through the cable pipes.

The design of the charging pole and its foot or base varies depending on the choice of charging pole provider and pole model. Therefore, the upper portion of the adapter element 11 should be designed accordingly to provide suitable coupling means for coupling the charging pole 1 to the adapter element 11.

The coupling means between the foundation member 9 and the adapter element 11 are designed such that, when the charging pole is forcefully rotated and moved, for example when hit by a car, the adapter element and/or the coupling means deforms and/or breaks without damaging or disrupting the functionality of the foundation member 9.

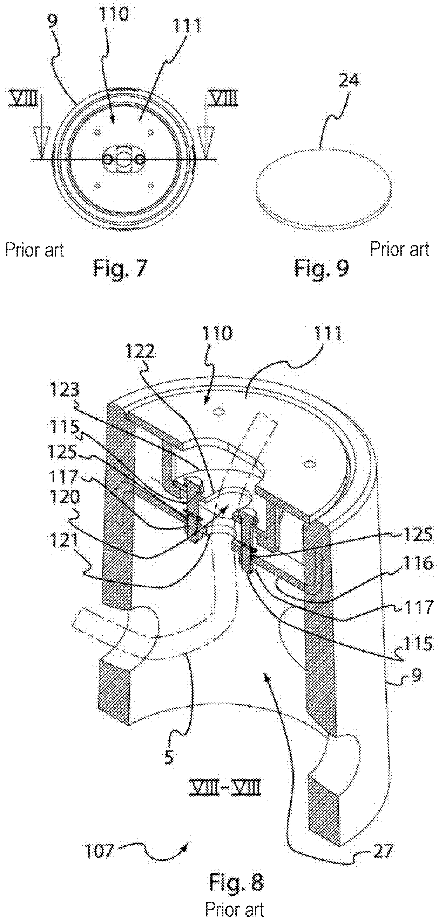

Figs 7 and 8 show a mounting device 107 according to a second prior art embodiment. This embodiment is similar to the previously described prior art mounting device 7 and therefore like reference numerals are increased by one hundred for easier recognition, for example 107 instead of 7, etc. A difference with respect to the previously described embodiment is the design of the anchoring means for attaching the charging pole to the foundation member 9. Here, a central passage 120 is provided through the anchoring means 110, such that rotation of the charging pole/adapter element 11/111 will not cause the cable 5 to be cut or damaged between the anchoring bar 116 and the adapter element 111. The anchoring bar 116 is provided with a central hole 121 through which the cable 5 to the charging pole passes, and a matching central hole 122 is provided through a mounting plate 123 of the adapter element 111. The mounting plate 123 is freely rotatable relatively the rest of the adapter element 111, and may thus be secured to the anchoring bar 116 without preventing adjustability during mounting of a charging pole. Two bolts 115 are provided to hold the attachment plate to the anchoring bar 116 and keep them from relative rotation.

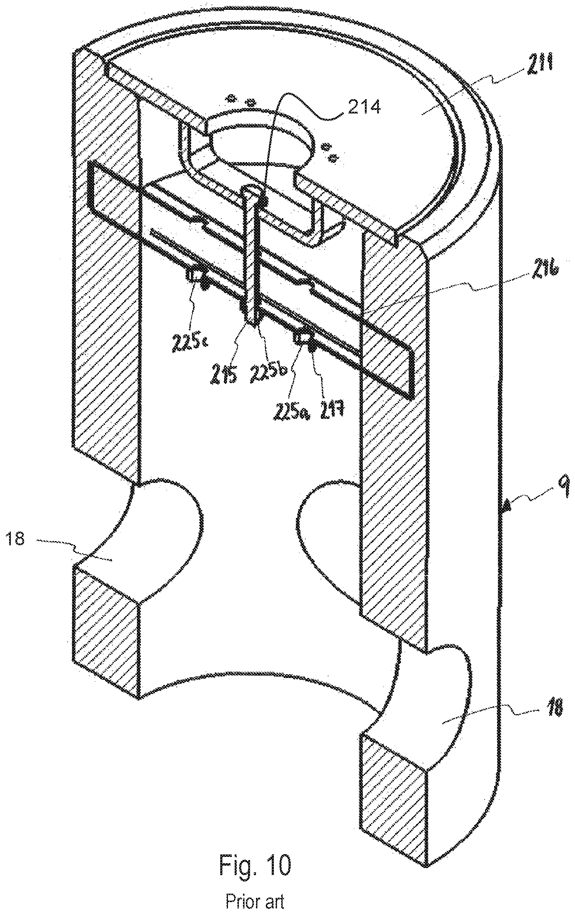

In yet another prior art embodiment another type of anchoring bar 216 is provided, as shown in Fig. 10. The anchoring bar 216 has the shape of a straight bar which may be provided with a hollow core, which leads to lower manufacturing cost and less material consumption. Between the two ends of the bar 216, there are three holes 225a-c each of which may receive a bolt 215 when engaging an adapter element 11; 111; 211 to the foundation member 9. In Fig. 10 an adapter element 211 similar to the adapter element 11 shown in Fig. 5 is used. This adapter element 11 is provided with a first element 12 which, in this case, includes one hole 14 (reference numeral 214 in Fig. 10) somewhere in the middle of the first element 12, which corresponds to the hole 225b of the bar 216, for receiving a bolt 215 when mounting the adapter element 211 to the foundation member 9. Since the bar 216 shown in Fig. 10 is provided with more than one hole it is also adapted for receiving the type of mounting plate 123 shown in Fig. 8 which includes, in this case, two possible attachment holes 125, disposed one on each side of the central hole 122, which corresponds to the two holes 225a, 225c of the bar 216. At one end of the threaded holes 225a-c a threaded element 217, which is a protrusion extending in a direction away from the anchoring bar 216, is arranged for anchoring the bolt 215 to the anchoring bar 216.

In other embodiments, the adapter element could be secured to the foundation member by other means than a bolt, such as by welding, adhering, or snap locking (not shown). Releasable engagement is preferred since it allows the adapter element to be temporarily removed to allow it to be modified for fitting a certain type of charging pole or for mending it if it has been damaged. Alternatively, it may be replaced by another adapter element of the same type or of a different type (not shown).

In the above described prior art embodiments, the foundation member 9 is provided with first coupling means, namely the anchoring bar 16; 116; 216 for engagement with a second coupling means of the adapter element 11; 111; 211, namely the mounting plate 123 and/or the bolt(s) 15; 115; 215. It should be understood that the skilled person may provide other coupling means for joining the adapter element 11; 111; 211 to the foundation member 9.

The modularity due to the provision of an adapter element 11; 111; 211 is of advantage since it allows any type of charging pole to be attached to the foundation member 9 without a substantial redesign or exchange of the mounting device. Thereby, the risk of an installed mounting device becoming obsolete is greatly reduced, effectively reducing the risk of investing in deployment of infrastructure for charging of electric vehicles.

The adapter element 11; 111; 211 is detachable such that it may be removed and optionally exchanged. Hence, an advantage of the system is that it enables easy post installation of charging poles 1 at a low cost.

As shown in Fig. 9, a cover member 24 may be provided for covering an upper portion of the foundation member 9 when no adapter element is present, such as by initial installation of a system when the number of installed mounting devices 7, 107 exceeds the number of installed charging poles 1. The cover member 24 is adapted to the foundation member 9 such that it covers inner space of the foundation member 9 to which the adapter element is supposed to fit. Thus, people can walk and drive normally on the ground level 6 where the system is installed. Also, sensitive parts inside the mounting device are protected from dirt and rain, for example electric cables that might be present. Extra protection may be provided by providing sealing means between the foundation member 9 and the cover member 24. In the basic embodiment shown in Fig. 9, the cover member is a circular plate but in other embodiments, it may be provided with attachment means for attachment to the foundation member 9, such as snap locking means or means for rotational interlocking with the foundation member 9.

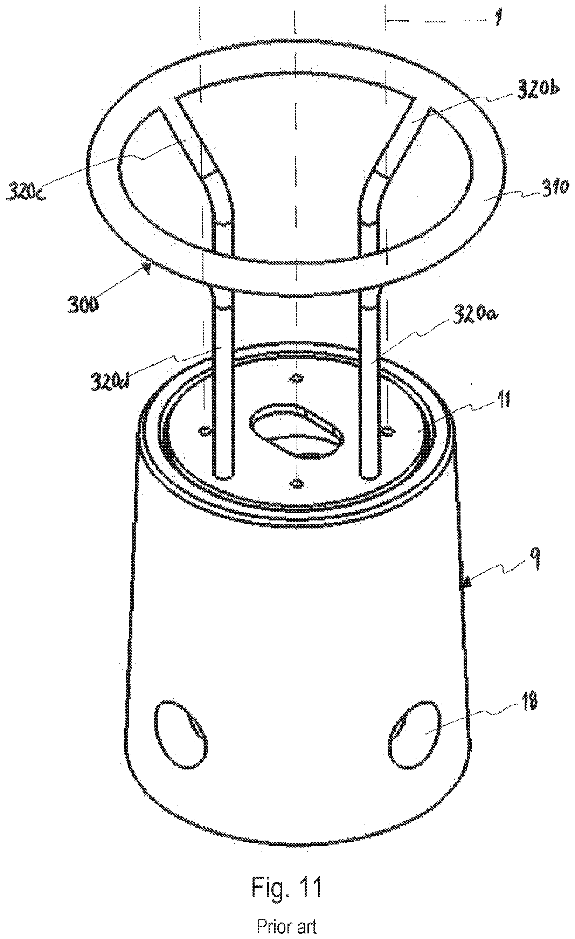

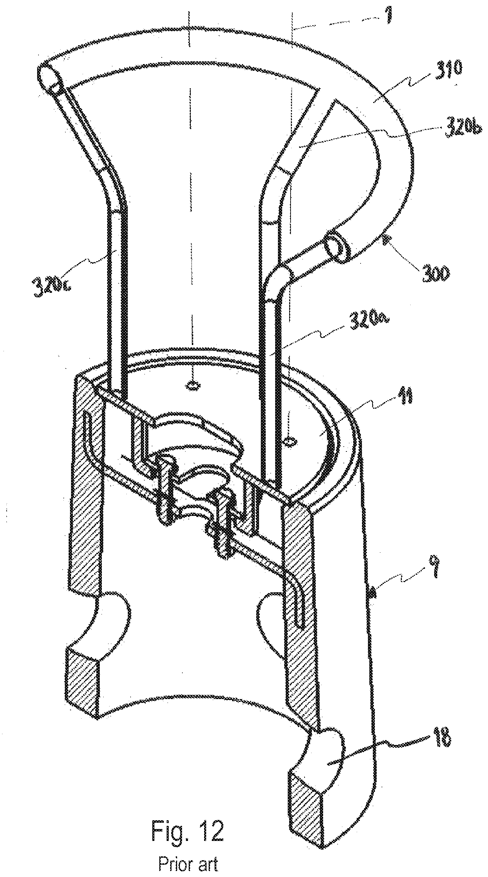

In a prior art embodiment known from WO2012101266A2, shown in Figs 11 and 12, a protection unit 300 is provided around the charging pole 1 for protection of the pole 1 from being hit by vehicles 3. The protection unit 300 may comprise an upper ring 310 for surrounding the pole 1, and four legs 320a-d extending along at least a portion of the extension of the pole 1, attaching the ring 310 to the adapter element 11 by means of additional holes, welds or other fastening means (not shown). The ring 310 and the four legs 320a-d may be made of any suitable material such as plastic, rubber or metal and may also be made as a solid or a hollow part.

An advantage of the adapter element 11 is thus that a protection unit 300, or the like, for protection of the charging pole 1 may be attached to the adapter element 11. Thus, if the protection unit 300 or charging pole 1 is hit by a vehicle 3, damage to the mounting device 7 is limited to the protection unit 300 and/or adapter element 11. Typically, only the adapter element 11 will need to be replaced after such an accident and not the whole mounting device 7.

Thus, the mounting device 7 provides lower overall maintenance cost of the infrastructure system, and also higher availability in terms of number of fully functioning charging poles 1, since replacement of the adapter element 11 can be made quickly without digging up, mending or replacing the foundation member 9.

The prior art system may be installed at a site by performing the following method steps:
providing a recess in ground,
providing a plurality of mounting devices 7; 107 according to the invention in said recess,
providing means for electrical connection to the mounting devices, for example by connecting cable pipes 8, and optionally cables 5, to the entry holes 18 of the mounting devices 7; 107, and
restoring ground 6 at said site such that no part of the mounting devices 7, 107 protrudes above ground level, for example by filling the recess with dirt and gravel.

Then either a cover member 24 or an adapter element 11; 111; 211 is provided at each respective mounting device 7; 107, depending on if a charging pole 1 is to be initially installed at the mounting device 7; 107 or not. By providing the recess, the mounting devices 7; 107 are positioned deep enough not to protrude above desired ground level.

Finally, a protection unit 300 may be mounted if there has been an adapter element 11; 111; 211 and a charging pole 1 have been installed.

As previously mentioned, a system according to WO2012101266A2 permits convenient and inexpensive post installation of charging poles 1. A charging pole 1 may be mounted to a mounting device 7 by performing the following method steps:
providing access to the anchoring means 10 of the mounting device 7 providing an adapter element 11 for fitting the charging pole 1 to the foundation member,
providing for electric supply to the charging pole by means of a cable 5 or cable pipe 8 of the foundation system, and
securing the charging pole 1 to the mounting device 7 by means of the anchoring means 10.

Access to the anchoring means 10 may be provided by removing the cover member 24, if present, and/or uncovering the mounting device 7, if covered by paving or the like.

In some examples, the mounting of the adapter element 11; 111; 211 is disposed within the interior of the foundation member 9.

In some examples, the first 16, 17; 116, 17; 216, 17 and second 15; 115, 123; 215 coupling means comprise a protrusion 5, 15 and a matching recess 25, 125 for jointly controlling relative movement between the foundation member 9 and the adapter element 11; 111; 211.

In some examples, the adapter element 11; 111; 211 is provided with third coupling means 26 for engagement with fourth coupling means of the charging pole 1.

In some examples, the third 26 and fourth coupling means comprise a protrusion and a matching recess for jointly controlling relative movement between the adapter element 11; 111; 211 and the charging pole 1.

In some examples, a passageway 27 for a cable is provided through the foundation member 9.

In some examples, a cover member 24 is configured to protect the open spaces from rain water.

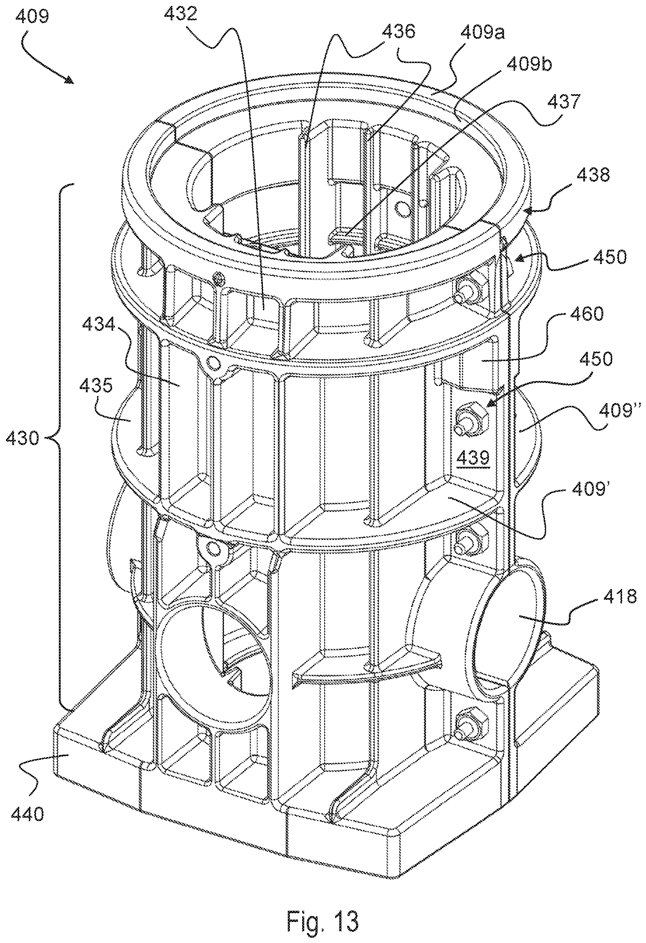

Turning now to Figs 13-16, the present invention provides charging station mounting device, which may alternatively be referred to as a charging pole mounting device, that is based on the same general idea as has been described with reference to figures 1-12 and in WO2012101266A2. However, the charging station mounting device comprises a two-part foundation member 409 as is illustrated in Figs 13-16. The device further comprises an anchoring means 10; 110 with a detachable adapter element 11; 111; 211 configured to fit the charging station to the foundation member 409 as has been described in the above prior art embodiments.

As has been mentioned, the skilled person may provide other coupling means for joining the adapter element 11; 111; 211 to the foundation member 9; 409 than those described above. Thus, for example, the anchoring bar 16; 116; 216; 416 is optional.

Fig. 13 shows an embodiment of the two-part foundation member 409 of the present invention true to scale, i.e. figure 13 is an accurate representation of the two-part foundation member 409 in one embodiment. The two-part foundation member 409 comprises a first main part 409', a second main part 409''. The charging station mounting device further comprises connection means 450 connecting the main parts 409', 409'' to each other and an anchoring bar 416.

The two-part foundation member 409, when installed, has the general form of a standing cylindrical structure 430 with a base 440. The height of the foundation member 409 is approximately 1.5 times the width of the foundation member 409.

The cylindrical structure 430 comprises a cylindrical wall 432 with a plurality of external, axial strengthening ribs 434 and external, radial strengthening ribs 435. In this example, there are also internal, axial strengthening ribs 436 and internal, radial strengthening ribs 437.

The strengthening ribs 434, 435, 436, 437 form external and internal strengthening grids on the cylindrical wall 432. The cylindrical wall 432 extends from the base 440 up (as seen when installed) to a to rim 438. The rim 438 is solid and has a greater thickness than the cylindrical wall 432. The external, axial strengthening ribs 434 extend from the base 440 to the rim 438. The upper surface of the rim 438 forms the top edge of the two-part foundation member 409.

The external strengthening grid 434, 435 will after installation of the charging station mounting device be filled with filling masses, such as macadam, and effectively act to hinder the two-part foundation member 409, and thus the charging station mounting device, from moving in the ground.

The base 440 that has a greater radial dimension than the cylindrical structure will also act to hinder the charging station mounting device from mowing in the ground. In this embodiment, the base 440 has the form of a polygon as seen from above, more particularly a square, which improves the ability of the base 440 to hinder the charging station mounting device from rotating when installed under ground.

The internal, axial strengthening ribs 436 preferably, as shown in this embodiment, have upper ends that lie flush with the recess 409b, such that the internal, axial strengthening ribs 436 provide additional support to the adapter element 11.

The main parts 409', 409'' respectively comprise a connection flange 439 with a number of axially distanced through holes by means of which the connection means 450, in this embodiment a bolt and nut assemblies, secure the connection flanges and thus the main parts 409', 409'' to each other. In other embodiment (not shown) the connection means 450 may e.g. be formed by snap locking means such as metal or plastic clamps.

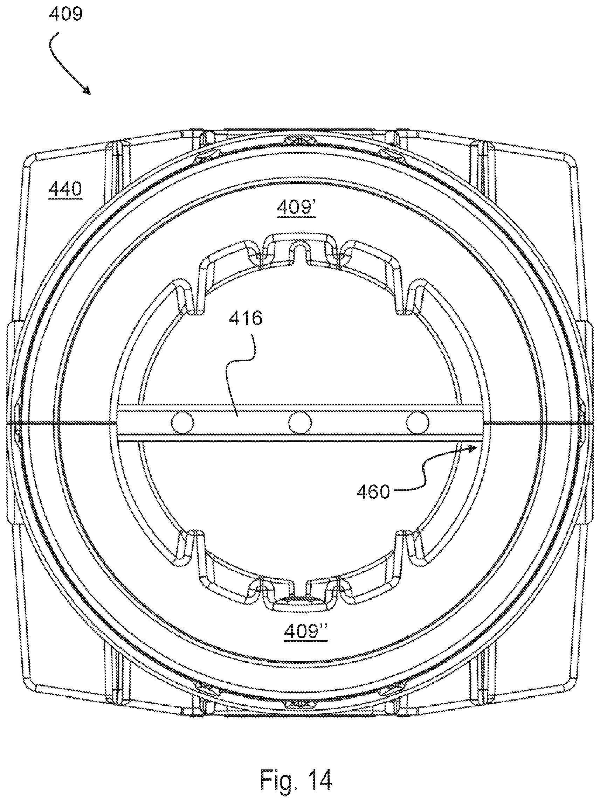

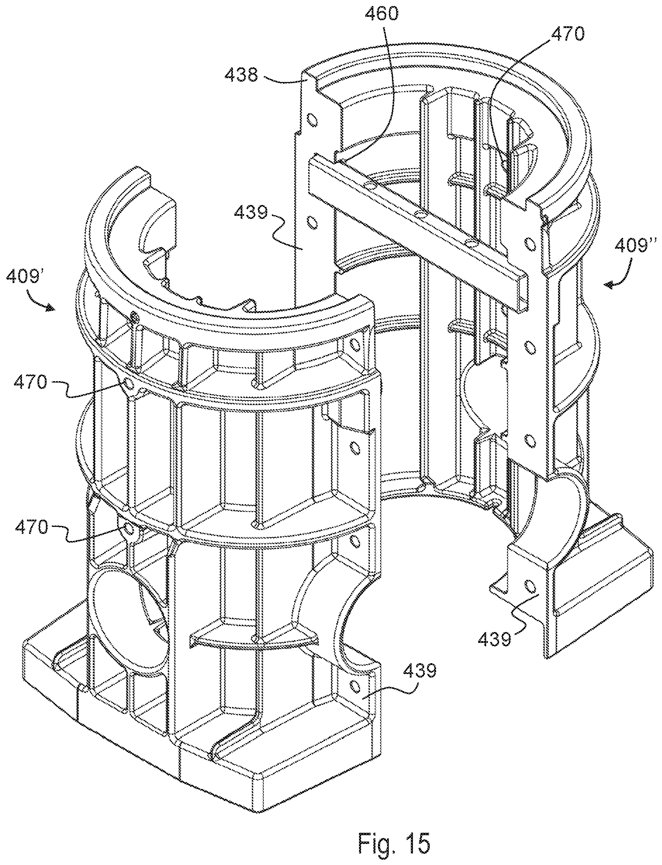

Figs 14 and 15 show top and exploded views of the two-part foundation member 409 with the first main part 409' and the second main part 409". The optional anchoring bar 416 is also shown. The first main part 409' and the second main part 409" both comprise an optional bar holder 460 for the anchoring bar 416. More precisely, there is a first bar holder portion 460' and a second bar holder portion 460" formed in the first and second main part 409', 409", respectively. When the first main part 409' and the second main part 409'' are assembled (figure 13 and 14) the respective ends of the anchoring bar 416 are held by the bar holders 460 of the first and second main parts 409', 409''. The bar holders 460 have the form of two radially opposing and inwards (towards the interior of the cylindrical structure 430) open boxes, when the first and second main parts 409', 409'' are assembled. Each bar holder 460 is formed in the standing cylindrical structure 430, as is shown e.g. in figure 13.

Preferably, the bar holders 460 are dimensioned such that the anchoring bar 416 is firmly clamped by the bar holders 460. The cross-section of the bar holders 460 when assembled, as seen in the radial direction, may correspond to the outer dimension of the anchoring bar 416. In the present embodiment of the two-part foundation member 409, the cross-section of the bar holders 460 is slightly smaller than the anchoring bar 416. The anchoring bar 416 is of the same type as the anchoring bar 216 shown in figure 10.

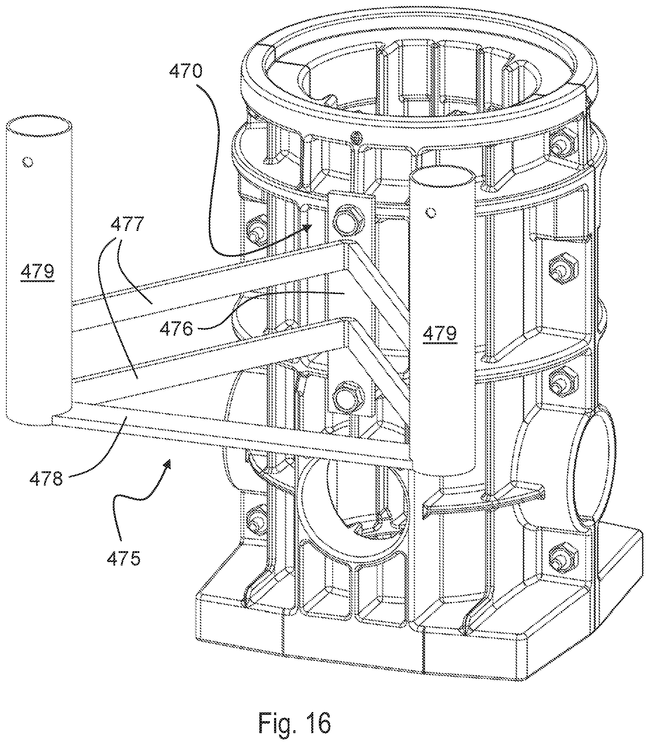

Fig. 16 shows the two-part foundation member 409 of figure 13 with an attached support means 475 for a protection unit. The two-part foundation member 409 comprises a support interface 470 for fitting the support means 475 thereto. In this embodiment, the support interface 470 has been realised as through-holes with surrounding abutment surfaces, as is shown in figure 16. The support means 475 comprises an abutment plate 476 that is adapted to lie against the abutment surfaces of the support interface 470. The abutment plate 476 comprises through-openings that math the through-holes of the support interface 470. In the present example, there are two through-openings in the abutment plate 476 and two through-holes in each one of the first and second main part 409', 409".

The support means 475 comprises a bracket structure 477 that connects two protection unit receivers 479 to the abutment plate 476. The protection unit receivers 479 are connected to each other at their lowermost ends by a cross bar 478. As seen from above, the bracket structure 477 and the cross bar 478 form a triangle, with the abutment plate 476 arranged in one corner of the triangle that points towards the two-part foundation member 409, and the two protection unit receivers 479 arranged in the two other corners of the triangle.

The protection unit receivers 479 are adapted to receive the legs of a protection unit. In this embodiment, the protection unit receivers 479 are hollow, circular cylinders each having an upper through-hole for a lock screw. A protection unit is not shown in figure 16, but a suitable protection unit may correspond to the protection unit 300 shown in figure 11, but with its legs and dimensions being modified to fit the protection unit receivers 479. Preferably, each one of the first and second main part 409', 409'' is furnished with a support means 475, such that four legs of a protection unit can be securely supported by the two-part foundation member 409.

The first and second main part 409', 409'' are in this embodiment of equal shape. They are manufactured from plastic material, more precisely recycled plastic material, preferably 100 % recycled plastic material.

The plastic material is in this embodiment a mixture of PP (polypropylene) and synthetic rubber. More precisely, the material is a mixture of PP and PP-EPDM (ethylene propylene diene terpolymer). PP-EPDM is a blend of PP and unvulcanised EPDM, also called ethylene propylene rubber. The anchoring bar 416 is made of metal, more precisely galvanized steel.

The entry openings or holes 418 for receiving the electric cable and/or cable pipe have rounded edges, which reduces any wear on the cables/pipes. Also, the plastic material involves the advantage of lower wear, as compared to a concrete foundation member.

The plastic two-part foundation member 409 provides a long-lasting support for the protection unit, especially when two-part foundation member 409 is made of mixture of PP and PP-EPDM. Should the protection unit be subject to an impact, the plastic two-part foundation member 409 provides resistance to cracking.

The provision of the bracket structure 477 that distances the protection unit receivers 479 from the support interface 470 and is buried, thus fixed, under ground further improves the support for the protection unit.

For the sake of legibility and reducing the reference numerals in figures 13 to 16, not all features of the two main parts 409', 409'' have not been provided with prime and double prime symbols. As is understood, however, there could be denoted a first main part connection flange 439' and a second main part connection frame 439'', a first main part base 440' and a second main part base 440'', and so on.

## Claims

1. A charging station (1) mounting device, said charging station (1) being arranged to charge a vehicle (3), the mounting device comprising:
a foundation member (409) configured to be installed below ground level (6),
anchoring means (10; 110) by which a charging station (1) is mountable to the foundation member (409) and which comprises a detachable adapter element (11; 111; 211) configured to fit the charging station (1) to the foundation member (409), wherein
the foundation member (409) comprises a first main part (409') and a second main part (409") that are adapted to be assembled together to form the foundation member (409),
the foundation member (409), when assembled, has the general form of a hollow cylinder, each one of the first and second main part (409', 409") having the general form of a half cylinder,
each one of the first and second main part (409', 409") comprises a plurality of external, axial strengthening ribs (434) and external, radial strengthening ribs (435),
each one of the first and second main part (409', 409") comprises a plurality of internal, axial strengthening ribs (436) and internal, radial strengthening ribs (437),
a peripheral top edge portion of the foundation member (409) comprises an annular recess (409b) which receives the adapter element (11), and
the internal, axial strengthening ribs (436) comprise upper ends that lie flush with the recess (409b), such that the internal, axial strengthening ribs (436) provide additional support to the adapter element (11).

2. The charging station (1) mounting device of claim 1, wherein each one of the first and second main part (409', 409") comprise a connection flange (439) for securing the first and second main part (409', 409") together.

3. The charging station (1) mounting device of claim 1 or 2, wherein the foundation member (409) comprises a cylindrical structure (430) comprising:
a base (440),
a rim (438) comprising an upper surface that forms the top edge of the foundation member (409), and
a cylindrical wall (432) on which the strengthening ribs (434, 435, 436, 437) are formed, wherein the cylindrical wall (432) extends from the base (440) to the rim (438),
wherein the rim (438) is solid and has a greater thickness than the wall (432).

4. The charging station (1) mounting device of any preceding claim, wherein the foundation member (409) comprises a plurality of entry openings or holes (418) for receiving an electric cable (19) and/or cable pipe from the side of the mounting device.

5. The charging station (1) mounting device of any preceding claim, wherein the foundation member (409) has the form of a hollow cylinder (430) with a base (440), the base (440) having a greater radial dimension than the cylindrical structure (430) whereby the base (440) acts to hinder the charging station mounting device from moving when installed, wherein the base (440) optionally has the form of a polygon, e.g. a square, as seen from above.

6. The charging station (1) mounting device of any preceding claim, wherein the first and second main parts (409', 409'') are of equal shape and are manufactured by injection moulding.

7. The charging station (1) mounting device of claim 6, wherein the first and second main parts (409', 409") are made of plastic material comprising polypropylene (PP).

8. The charging station (1) mounting device of claim 7, wherein the plastic material comprises rubber.

9. The charging station (1) mounting device of claim 8, wherein the rubber is a blend of polypropylene and ethylene propylene diene terpolymer (PP-EPDM).

10. The charging station (1) mounting device of any preceding claim, further comprising an anchoring bar (416), the foundation member (409) comprising means for holding the respective ends of the anchoring bar (416).

11. The charging station (1) mounting device of claim 10, wherein the first main part (409') and the second main part (409") are adapted to hold the respective ends of the anchoring bar (416) between them when assembled.

12. The charging station (1) mounting device of claim 11, wherein the first main part (409') and the second main part (409"), when assembled, form bar holders (460) that hold, preferably clamp, the anchoring bar (416) between the first main part (409') and the second main part (409").

13. The charging station (1) mounting device of any preceding claim, wherein at least one of the first main part (409') and the second main part (409") comprises a support interface (470) for protection unit receivers (479) that are adapted to hold a protection unit.

## Patentansprüche

1. Vorrichtung für die Montage einer Ladestation (1), wobei die Ladestation (1) ausgelegt ist, ein Fahrzeug (3) aufzuladen, wobei die Montagevorrichtung Folgendes umfasst:
ein Fundamentelement (409), das konfiguriert ist, unter Bodenhöhe (6) installiert zu werden,
ein Verankerungsmittel (10; 110), durch das eine Ladestation (1) am Fundamentelement (409) angebracht werden kann und das ein abnehmbares Adapterelement (11; 111; 211) aufweist, das konfiguriert ist, die Ladestation (1) am Fundamentelement (409) einzupassen, wobei
das Fundamentelement (409) eine erste Hauptkomponente (409') und eine zweite Hauptkomponente (409") umfasst, die ausgelegt sind, zusammengebaut zu werden, um das Fundamentelement (409) zu bilden,
wobei das Fundamentelement (409) dann, wenn es zusammengebaut ist, die allgemeine Form eines Hohlzylinders aufweist, wobei die erste und die zweite Hauptkomponente (409', 409") jeweils die allgemeine Form eines Halbzylinders aufweisen,
wobei die erste und die zweite Hauptkomponente (409', 409") jeweils mehrere äußere axiale Verstärkungsrippen (434) und äußere radiale Verstärkungsrippen (435) umfassen,
wobei die erste und die zweite Hauptkomponente (409', 409") jeweils mehrere innere axiale Verstärkungsrippen (436) und innere radiale Verstärkungsrippen (437) umfassen,
wobei ein umlaufender oberer Randabschnitt des Fundamentelements (409) eine ringförmige Aussparung (409b) umfasst, die das Adapterelement (11) aufnimmt, und
wobei die inneren axialen Verstärkungsrippen (436) obere Enden umfassen, die mit der Aussparung (409b) bündig liegen, derart, dass die inneren axialen Verstärkungsrippen (436) zusätzliche Unterstützung für das Adapterelement (11) bereitstellen.

2. Vorrichtung für die Montage einer Ladestation (1) nach Anspruch 1, wobei die erste und die zweite Hauptkomponente (409', 409") jeweils einen Verbindungsflansch (439) zum Arretieren der ersten und der zweiten Hauptkomponente (409', 409") aneinander umfassen.

3. Vorrichtung für die Montage einer Ladestation (1) nach Anspruch 1 oder 2, wobei das Fundamentelement (409) eine zylindrische Struktur (430) umfasst, die Folgendes umfasst:
einen Sockel (440),
einen Kranz (438), der eine obere Fläche umfasst, die den oberen Rand des Fundamentelements (409) bildet, und
eine zylindrische Wand (432), auf der die Verstärkungsrippen (434, 435, 436, 437) gebildet sind, wobei sich die zylindrische Wand (432) vom Sockel (440) zum Kranz (438) erstreckt,
wobei der Kranz (438) fest ist und eine größere Dicke als die Wand (432) aufweist.

4. Vorrichtung für die Montage einer Ladestation (1) nach einem der vorhergehenden Ansprüche, wobei das Fundamentelement (409) mehrere Eintrittsöffnungen oder Löcher (418) zum Aufnehmen eines Elektrokabels (19) und/oder eines Kabelrohrs von der Seite der Montagevorrichtung umfasst.

5. Vorrichtung für die Montage einer Ladestation (1) nach einem der vorhergehenden Ansprüche, wobei das Fundamentelement (409) die Form eines Hohlzylinders (430) mit einem Sockel (440) aufweist, wobei der Sockel (440) eine größere radiale Abmessung als die zylindrische Struktur (430) aufweist, wobei der Sockel (440) derart wirkt, dass verhindert wird, dass sich die Ladestations-Montagevorrichtung bewegt, wenn sie installiert wird, wobei der Sockel (440) von oben betrachtet wahlweise die Form eines Polygons wie z. B. eines Quadrats aufweist.

6. Vorrichtung für die Montage einer Ladestation (1) nach einem der vorhergehenden Ansprüche, wobei die erste und die zweite Hauptkomponente (409', 409") die gleiche Form aufweisen und durch Spritzgießen hergestellt werden.

7. Vorrichtung für die Montage einer Ladestation (1) nach Anspruch 6, wobei die erste und die zweite Hauptkomponente (409', 409") aus einem Kunststoffmaterial hergestellt sind, das Polypropylen (PP) umfasst.

8. Vorrichtung für die Montage einer Ladestation (1) nach Anspruch 7, wobei das Kunststoffmaterial Kautschuk umfasst.

9. Vorrichtung für die Montage einer Ladestation (1) nach Anspruch 8, wobei der Kautschuk eine Mischung aus Polypropylen und Ethylen-Propylen-Dien-Terpolymer (PP-EPDM) ist.

10. Vorrichtung für die Montage einer Ladestation (1) nach einem der vorhergehenden Ansprüche, die ferner eine Verankerungsstange (416) umfasst, wobei das Fundamentelement (409) Mittel zum Halten der jeweiligen Enden der Verankerungsstange (416) umfasst.

11. Vorrichtung für die Montage einer Ladestation (1) nach Anspruch 10, wobei die erste Hauptkomponente (409') und die zweite Hauptkomponente (409") ausgelegt sind, die jeweiligen Enden der Verankerungsstange (416) dazwischen zu halten, wenn sie zusammengebaut sind.

12. Vorrichtung für die Montage einer Ladestation (1) nach Anspruch 11, wobei die erste Hauptkomponente (409') und die zweite Hauptkomponente (409") dann, wenn sie zusammengebaut sind, Stangenhalter (460) bilden, die die Verankerungsstange (416) zwischen der ersten Hauptkomponente (409') und der zweiten Hauptkomponente (409") halten, vorzugsweise einklemmen.

13. Vorrichtung für die Montage einer Ladestation (1) nach einem der vorhergehenden Ansprüche, wobei die erste Hauptkomponente (409') und/oder die zweite Hauptkomponente (409") eine Trägerschnittstelle (470) für Schutzeinheitsaufnahmen (479), die ausgelegt sind, eine Schutzeinheit zu halten, umfassen.

## Revendications

1. Dispositif de montage de station de charge (1), ladite station de charge (1) étant agencée pour charger un véhicule (3), le dispositif de montage comprenant :
un organe de fondation (409) configuré pour être installé sous le niveau du sol (6),
un moyen d'ancrage (10 ; 110) par lequel une station de charge (1) peut être montée sur l'organe de fondation (409) et qui comprend un élément adaptateur (11 ; 111 ; 211) détachable configuré pour adapter la station de charge (1) à l'organe de fondation (409), dans lequel
l'organe de fondation (409) comprend une première partie principale (409') et une seconde partie principale (409") qui sont adaptées pour être assemblées ensemble pour former l'organe de fondation (409),
l'organe de fondation (409), lorsqu'il est assemblé, présente la forme générale d'un cylindre creux, chacune des première et seconde parties principales (409', 409") présentant la forme générale d'un demi-cylindre,
chacune des première et seconde parties principales (409', 409") comprend une pluralité de nervures de renforcement axiales externes (434) et de nervures de renforcement radiales externes (435),
chacune des première et seconde parties principales (409', 409") comprend une pluralité de nervures de renforcement (436) axiales internes et de nervures de renforcement (437) radiales internes,
une portion de bord supérieur périphérique de l'organe de fondation (409) comprend un évidement annulaire (409b) qui reçoit l'élément adaptateur (11), et
les nervures de renforcement (436) axiales internes comprennent des extrémités supérieures qui affleurent l'évidement (409b), de sorte que les nervures de renforcement (436) axiales internes fournissent un support supplémentaire à l'élément adaptateur (11).

2. Dispositif de montage de station de charge (1) selon la revendication 1, dans lequel chacune des première et seconde parties principales (409', 409") comprend une bride de liaison (439) pour fixer ensemble les première et seconde parties principales (409', 409").

3. Dispositif de montage de station de charge (1) selon la revendication 1 ou 2, dans lequel l'organe de fondation (409) comprend une structure cylindrique (430) comprenant :
une base (440),
un rebord (438) comprenant une surface supérieure qui forme le bord supérieur de l'organe de fondation (409), et
une paroi (432) cylindrique sur laquelle les nervures de renforcement (434, 435, 436, 437) sont formées, dans lequel la paroi (432) cylindrique s'étend à partir de la base (440) jusqu'au rebord (438),
dans lequel le rebord (438) est solide et présente une épaisseur plus importante que la paroi (432).

4. Dispositif de montage de station de charge (1) selon l'une quelconque des revendications précédentes, dans lequel l'organe de fondation (409) comprend une pluralité d'ouvertures ou de trous d'entrée (418) pour recevoir un câble électrique (19) et/ou un tuyau de câble depuis le côté du dispositif de montage.

5. Dispositif de montage de station de charge (1) selon l'une quelconque des revendications précédentes, dans lequel l'organe de fondation (409) présente la forme d'un cylindre creux (430) avec une base (440), la base (440) présentant une dimension radiale plus importante que la structure cylindrique (430) moyennant quoi la base (440) agit pour empêcher le dispositif de montage de station de charge de bouger lorsqu'il est installé, dans lequel la base (440) présente facultativement la forme d'un polygone, par exemple un carré, tel que vu de dessus.

6. Dispositif de montage de station de charge (1) selon l'une quelconque des revendications précédentes, dans lequel les première et seconde pièces principales (409', 409") sont de forme égale et sont fabriquées par moulage par injection.

7. Dispositif de montage de station de charge (1) selon la revendication 6, dans lequel les première et seconde parties principales (409', 409") sont constituées d'un matériau plastique comprenant du polypropylène (PP).

8. Dispositif de montage de station de charge (1) selon la revendication 7, dans lequel le matériau plastique comprend du caoutchouc.

9. Dispositif de montage de station de charge (1) selon la revendication 8, dans lequel le caoutchouc est un mélange de polypropylène et de terpolymère éthylène-propylène-diène (PP-EPDM).

10. Dispositif de montage de station de charge (1) selon l'une quelconque des revendications précédentes, comprenant en outre une barre d'ancrage (416), l'organe de fondation (409) comprenant des moyens de maintien des extrémités respectives de la barre d'ancrage (416).

11. Dispositif de montage de station de charge (1) selon la revendication 10, dans lequel la première partie principale (409') et la seconde partie principale (409") sont adaptées pour maintenir les extrémités respectives de la barre d'ancrage (416) entre elles lorsqu'elles sont assemblées.

12. Dispositif de montage de station de charge (1) selon la revendication 11, dans lequel la première partie principale (409') et la seconde partie principale (409"), lorsqu'elles sont assemblées, forment des éléments de maintien de barre (460) qui maintiennent, de préférence qui serrent, la barre d'ancrage (416) entre la première partie principale (409') et la seconde partie principale (409").

13. Dispositif de montage de station de charge (1) selon l'une quelconque des revendications précédentes, dans lequel au moins l'une parmi la première partie principale (409') et la seconde partie principale (409") comprend une interface de support (470) pour des éléments de réception d'unité de protection (479) qui sont adaptés pour maintenir une unité de protection.
